**Europäisches Patentamt**

**European Patent Office**

**Office européen des brevets**

(19)

(11) **EP 1 582 554 A1**

(12) **EUROPÄISCHE PATENTANMELDUNG**

(43) Veröffentlichungstag:
05.10.2005 Patentblatt 2005/40

(51) Int Cl.$^7$: **C08J 5/18**, H01G 4/00

(21) Anmeldenummer: 05006173.8

(22) Anmeldetag: 22.03.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **01.04.2004 DE 102004016054**

(71) Anmelder: **Mitsubishi Polyester Film GmbH**
**65203 Wiesbaden (DE)**

(72) Erfinder:
• **Kliesch, Holger, Dr.**
**55252 Mainz (DE)**

• **Murschall, Ursula, Dr.**
**55283 Nierstein (DE)**
• **Kern, Ulrich, Dr.**
**55218 Ingelheim (DE)**
• **Kuhmann, Bodo**
**65594 Runkel (DE)**

(74) Vertreter: **Schweitzer, Klaus et al**
**Patentanwaltskanzlei Zounek,**
**Industriepark Kalle-Albert,**
**Gebäude H391**
**Rheingaustrasse 190-196**
**65174 Wiesbaden (DE)**

(54) **Thermoplastfolie zur Herstellung von Kondensatoren mit verbesserter Spannungsfestigkeit, ein Verfahren zur Herstellung sowie ihre Verwendung**

(57) Die Erfindung betrifft eine leitfähig beschichtete, orientierte Folie aus einem Thermoplasten, deren Dicke im Bereich von 0,5 bis 12 µm liegt. Die Folie zeichnet sich durch ihre guten dielektrischen Eigenschaften aus. Sie enthält neben einer leitfähigen Beschichtung weiterhin einen Stabilisator zur Verbesserung der Spannungsfestigkeit. Die Erfindung betrifft ferner ein Verfahren zur Herstellung der Folie sowie ihre Verwendung in Folienkondensatoren.

Printed by Jouve, 75001 PARIS (FR)

**Beschreibung**

Die Erfindung betrifft eine leitfähig beschichtete, orientierte Folie aus einem Thermoplasten, deren Dicke im Bereich von 0,5 bis 12 µm liegt. Die Folie zeichnet sich durch ihre guten dielektrischen Eigenschaften aus. Sie enthält weiterhin neben einer leitfähigen Beschichtung einen Stabilisator zur Verbesserung der Spannungsfestigkeit. Die Erfindung betrifft ferner ein Verfahren zur Herstellung der Polyesterfolie sowie ihre Verwendung in Folienkondensatoren.

Folien aus Thermoplasten im angegebenen Dickenbereich, die sich zur Herstellung von Folienkondensatoren eignen, sind hinreichend bekannt.

Folien zur Herstellung von Kondensatoren müssen hohen Ansprüchen hinsichtlich ihrer elektrischen Durchschlagfestigkeit und ihrer dielektrischen Absorption genügen, um im Kondensator eine ausreichende Spannungsbelastbarkeit zu gewährleisten und um sich beim Lade- und Entladevorgang nur geringfügig zu erwärmen. Dies wird wie u.a. in EP-A-0 791 633 beschrieben durch eine hohe Reinheit der eingesetzten Rohstoffe gewährleistet. In der vorliegenden Schrift können keine Hinweise auf Antimonkristalle gefunden werden sowie keine Hinweise auf den Einsatz von zusätzlichen Stabilisatoren.

Die in der industriellen Praxis verwendeten Katalysatoren zur Polykondensation von Polyestern sind Antimon-, Titan- und Germaniumverbindungen bzw. Salze. Germaniumbasierte Katalysatoren haben aus dieser Gruppe die höchste katalytische Aktivität gefolgt von Titankatalysatoren. Antimonkatalysatoren weisen dagegen die geringste relative Aktivität auf. Dennoch wird der bei weitem überwiegende Teil der auf dem Weltmarkt verwendeten Polyester mit Hilfe von Antimonkatalysatoren hergestellt. Dies liegt daran, dass Germaniumkatalysatoren aufgrund ihres extrem hohen Preises in der Regel unwirtschaftlich sind und Titankatalysatoren zu einer unerwünschten Gelbfärbung und verringerter Thermostabilität des Rohstoffs führen. Diese nachteiligen Eigenschaften werden durch Nebenreaktionen verursacht, die nach unseren internen Untersuchungen neben der Bildung einer vermehrten Zahl von unerwünschten Gelteilchen auch eine deutlich verringerte Prozessstabilität bewirken.

Polyesterfolien werden allgemein aus einem Kunststoffgranulat hergestellt, das in einem Extruder aufgeschmolzen wird. Über eine Breitschlitzdüse wird die dabei erzeugte Kunststoffschmelze zu einer so genannten Vorfolie geformt. Die Vorfolie wird dann an einer Abzugs- und Kühlwalze angelegt, anschließend in Längs- und Querrichtung verstreckt und schließlich aufgerollt. Die Folien sollen dabei eine geringe Zahl von Gelteilchen und sonstigen Defekten aufweisen, die das Aussehen oder die weitere Verarbeitung beeinträchtigen. Gelteilchen vermindern bei der Folienproduktion die Prozessstabilität, d.h. sie führen zu unerwünschten Abrissen. Daneben verstopfen Gelteilchen die Filter im Extrusionsbereich, was zu weiteren wirtschaftlichen Ausfällen führt.

Bei großen Änderungen der Feldstärke pro Zeit wie beim Laden und Entladen des Kondensators kommt es im Dielektrikum zur Bildung von Ladungsträgern und zu Bewegungen derselben, wodurch sich die Kondensatorfolie lokal aufheizt. Die Ladungsträger können durch das Katalysatorsystem aber auch bereits im Rohstoff vorhanden sein oder durch den elektrischen Impuls durch Bindungsspaltung gebildet werden. Hierbei entstehen vor allem radikalische Ladungsträger, die sich zu den bereits im Rohstoff vorhandenen Ladungsträgern hinzu addieren. Während des Impulses wirken auch mechanische und thermomechanische Kräfte auf die Folienlagen, die im ungünstigsten Falle zu einer Ablösung einzelner Lagen aus der Schoopschicht führen können.

Aufgabe der Erfindung ist es, eine Folie bereitzustellen, welche die beschriebenen Nachteile des Standes der Technik nicht aufweist.

Gegenstand der Erfindung ist eine leitfähig beschichtete, orientierte Folie aus einem Thermoplasten mit einer Dicke im Bereich von 0,5 bis 12 µm, die dadurch gekennzeichnet ist, dass sie neben einer leitfähigen Beschichtung mindestens einen Stabilisator in Mengen von 50 bis 15 000 ppm, bezogen auf das Gewicht der Folie, enthält.

Gegenstand der Erfindung ist weiterhin ein Verfahren zur Herstellung dieser Folie sowie deren Verwendung in Folienkondensatoren.

Der Begriff "Stabilisator" bezieht sich auf Verbindungen, die in der Folie als Radikalfänger beziehungsweise als Thermostabilisator eingesetzt werden und zwar bevorzugt in Mengen von 100 bis 5 000 ppm, besonders bevorzugt 300 bis 1 000 ppm, bezogen auf das Gewicht der Folie. Sie dienen zum Abfangen der während Spannungsänderungen gebildeten Ladungsträger in den verwendeten Folienkondensatoren.

Die Folie enthält als Hauptbestandteil einen Thermoplasten. Geeignete Thermoplaste sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB) und bibenzolmodifiziertes Polyethylennaphthalat (PENBB) oder Mischungen davon, vorzugsweise PET, PBT oder PEN.

Zur Herstellung von thermoplastischen Polyestern können neben den Hauptmonomeren, wie Dimethylterephthalat (DMT), Ethylenglykol (EG), Propylenglykol (PG), Butan-1,4-diol, Terephthalsäure (TA), Benzoldicarbonsäure und/ oder Naphthalin-2,6-dicarbonsäure (NDA), auch noch Isophthalsäure (IPA) und/ oder cis- und/oder trans-1,4-Cyclohexandimethanol (c-CHDM, *t*-CHDM oder *c/t*-CHDM) und andere geeignete Dicarbonsäurekomponenten (oder Dicarbonsäureester) und Diolkomponenten verwendet werden.

Bevorzugt sind hierbei Polymere, bei denen die Dicarbonsäurekomponente zu mehr als 95 % aus Terephthalsäure oder Naphthalin-2,6-dicarbonsäure (NDA) besteht. Besonders bevorzugt sind Polymere, bei denen die Dicarbonsäurekomponente zu mehr als 98 % aus einer der beiden zuvor genannten Dicarbonsäurekomponenten besteht. Bevorzugt sind weiterhin Polymere, bei denen die Diolkomponente zu mehr als 90 % aus Ethylenglykol besteht. Besonders bevorzugt sind Polymere, bei denen die Diolkomponente zu mehr als 93 % aus Ethylenglykol besteht. Bevorzugt sind weiterhin Polymere, bei denen der Diethylenglykolanteil am Gesamtpolymer zwischen 1 und 2 % liegt.

Das Polymere kann weiterhin anorganische oder organische Partikel enthalten, welche zur Einstellung der Oberflächentopographie benötigt werden. Geeignete Partikel sind z.B. Calciumcarbonat, Apatit, Siliziumdioxyd, Titandioxyd, Aluminiumoxyd, vernetztes Polystyrol, Zeolithe und andere Silikate und Aluminiumsilikate.

Zum Erreichen hoher Impulsfestigkeiten hat es sich als zweckmäßig erwiesen, wenn der Schmelzewiderstand des verwendeten Thermoplasts im Mittel einen Wert von $\geq 1 * 10^7 \ \Omega$ cm, bevorzugt $\geq 10 * 10^7 \ \Omega$ cm und besonders bevorzugt $\geq 25 * 10^7 \ \Omega$, cm und $\leq 150 * 10^7 \ \Omega$ cm besitzt. Der Mittelwert wird berechnet nach der Formel

$$1 / (x_1 * 1 / W_1 + x_2 * 1 / W_2 + \text{.......} + x_n * 1 / W_n)$$

wobei

$x_1 (x_n) =$        Anteil des Thermoplasts der Komponente 1 (n) und
$W_1 (W_n) =$     Widerstand des Thermoplasts der Komponente 1 (n) bedeutet.

Derartige Schmelzewiderstände werden vom Fachmann über die Gewichtsverhältnisse der von der Herstellung im Polymeren enthaltenen Katalysatoren (Antimon, Titan, Calcium, Mangan usw.) und der üblicherweise bei der Polyesterherstellung eingesetzten Phosphor-Stabilisatorkomponenten eingestellt. Beispielsweise führt ein Polymer, hergestellt mit 300 ppm $Sb_2O_3$ als Katalysator und 200 ppm Calciumacetat sowie 130 ppm Phosphoriger Säure, zu einem Schmelzewiderstand ($30 * 10^7 \Omega$ cm) im gewünschten Bereich. Phosphorstabilisator bedeutet in diesem Zusammenhang nicht die vorgenannten Radikalfänger, sondern beschreibt Verbindungen, die zum Abfangen von Erdalkalüonen geeignet sind.

Die Standardviskosität SV (DCE) der Folie in einer bevorzugten Ausführungsform aus Polyethylenterephthalat liegt allgemein im Bereich von 600 bis 1 000, bevorzugt von 700 bis 900. Je nach prozessbedingtem SV-Verlust in der Extrusion (abhängig vom gewählten Trocknertyp und Bedingungen) liegt der SV der Eingangsrohstoffe im Mittel um 5 bis 70 Einheiten über den genannten Bereichen für die Folie.

Neben den erwähnten Additiven kann die Folie zusätzlich weitere Komponenten wie Hydrolysestabilisatoren und/oder andere Polymere wie Polyetherimide enthalten.

Die erfindungsgemäße Folie ist im allgemeinen einschichtig. Für spezielle Anwendungen kann sie aber auch mehrschichtig z.B. koextrudiert sein.

Die bei der Herstellung des Thermoplasten dem Thermoplastrohstoff zugegebenen Stabilisatoren werden beliebig ausgewählt aus der Gruppe der primären Stabilisatoren, wie sterisch gehinderte Phenole oder sekundäre aromatische Amine, oder der Gruppe der sekundären Stabilisatoren, z.B. Thioether, Phosphite und Phosphonite sowie Zink-dibuthyldithiocarbamat, oder synergistische Mischungen aus primären und sekundären Stabilisatoren.

Bevorzugt sind die phenolischen Stabilisatoren. Zu diesen zählen insbesondere sterisch gehinderte Phenole, Thio-bisphenole, Alkyliden-bisphenole, Alkyl-phenole, Hydroxybenzyl-Verbindungen, Acryl-amino-phenole und Hydroxyphenylpropionate (entsprechende Verbindungen sind beispielsweise beschrieben in "Kunststoffadditive", 2. Ausgabe, Gächter Müller, Carl Hanser-Verlag und in "Plastics Additives Handbook", 5. Ausgabe, Dr. Hans Zweifel, Carl Hanser-Verlag).

Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie Irganox® 1222 der Fa. Ciba Specialties, Basel, Schweiz, oder Mischungen daraus. Beispiele dieser Verbindungen sind Irganox® 1010, Irganox® 1222, Irganox® 1330 und Irganox® 1425.

Bei Verwendung des Stabilisators mit der CAS-Nummer 65140-91-2, der Calciumionen enthält, hat es sich als günstig erwiesen, wenn dem Rohstoff mindestens 30 % der der Stabilisatormenge in ppm entsprechenden Menge an Phosphor aus Phosphoriger Säure oder aus anderen Phosphorstabilisatoren zugegeben werden. Diese Phosphorstabilisatormenge verhindert, dass sich die Calciumionen aus CAS-Nummer 65140-91-2 bei dem Einsatz der Folie in Folienkondensatoren im elektrischen Feld bewegen.

Üblicherweise werden die Stabilisatoren im Falle des DMT-Verfahrens nach der Umesterung bzw. direkt vor der Polykondensation, oder auch während der Polykondensation als glykolische Lösung bzw. Dispersion zugegeben. Besonders bevorzugt sind dabei die Stabilisatoren, die während der Rohstoffherstellung in die Polymerkette eingebaut werden, da sie dann im elektrischen Feld bei dem Einsatz der Folie in Folienkondensatoren nicht wandern können. Beispiele für diese Stabilisatoren sind diejenigen mit den CAS-Nummern 6683-19-8, 36443-68-2, 35074-77-2, 23128-74-7, 41484-35-9 und 2082-79-3. Bevorzugt im Sinne der Erfindung ist die Verwendung von Irganox® 1010.

Die genannten Stabilisatoren werden in den vorstehend angeführten Mengen zugegeben.

Die vernetzungsreduzierende Wirkung solcher Stabilisatoren, die als Radikalfänger wirken, in Polyesterwerkstoffen ist bekannt. Da Polyesterrohstoffe, die zum überwiegenden Teil (mehr als 90 %) aus PET oder PEN bestehen, aber unter üblichen Verarbeitungsbedingungen nur in sehr geringem Umfang zu durch solche Stabilisatoren unterdrückbaren Nebenreaktionen neigen, werden Polyesterfolien im allgemeinen ohne Zugabe solcher Verbindungen hergestellt. Bestimmte Prozessbedingungen oder Anwendungen, bei denen besonders geringe Gelteilchenkonzentrationen erforderlich sind, können die Verwendung jedoch wirtschaftlich sinnvoll machen.

Antimonkatalysierte Rohstoffe weisen in der Regel Antimonkristalle auf, die sich in einer Nebenreaktion aus den eingesetzten Antimonverbindungen bilden. Antimonkristalle sind metallische Leiter und setzen die Spannungsfestigkeit der Kondensatoren herab. Daher ist es wünschenswert, wenn eine Kondensatorfolie keine oder nur sehr kleine Antimonkristalle enthält.

Als zweckmäßig hat es sich erwiesen, wenn Rohstoffe verwendet werden, die, falls antimonkatalysiert, anorganische Partikel wie gefällte synthetische oder natürliche Kieselsäuren, Aluminiumsilikate oder apatitähnliche Partikel mit einem Teilchendurchmesser von $d_{50} \geq 1$ µm in einer Konzentration von 50 bis 50 000 ppm aufweisen. Überraschend hat sich gezeigt, dass in derartigen Rohstoffen, die die genannten Partikel enthalten, keine Sb-Kristalle gefunden werden, die einen $d_{50}$-Wert von $\geq 0,5$ µm aufweisen.

Ferner hat es sich als günstig erwiesen, dass bei Verwendung von Rohstoffen, die keine derartigen anorganischen Partikel enthalten, solche Thermoplasten eingesetzt werden, bei deren Herstellung keine Sb-Verbindungen als Polykondensationskatalysatoren eingesetzt wurden, wie beispielsweise titankatalysierte Polyester.

Die besten Resultate hinsichtlich Spannungsfestigkeit von Folienkondensatoren werden erzielt, wenn Rohstoffe verwendet werden, die kein Antimon als Polykondensationskatalysatoren enthalten und mindestens einer der verwendeten Rohstoffe die oben genannten anorganischen Partikel enthält. Weiterhin ist es von Vorteil, wenn mindestens 25 %, bevorzugt mindestens 30 %, besonders bevorzugt mindestens 40 % der eingesetzten Rohstoffmenge die zuvor beschriebenen Stabilisatoren als Radikalfänger enthalten.

Werden antimonkatalysierte Rohstoffe verwendet, die keine oder kleinere als 1 µm große anorganische Partikel enthalten, so bilden sich Antimonkristalle bzw. es werden Partikel gefunden, die einen Überzug aus metallischem Antimon enthalten. Antimonkristalle werden ebenfalls dann gefunden, wenn Partikel verwendet werden, die nicht vollständig in der Polymermatrix eingebunden sind, wie beispielsweise Calciumcarbonat-Partikel.

In einer bevorzugten Ausführung sind die Folien schrumpfarm, und außerdem sind die mit den Folien gemäß der Erfindung hergestellten Kondensatoren SMD-lötfähig. SMD-lötfähig bedeutet, dass sich die Kondensatoren bei den für Reflow-Löten üblichen Temperaturen oberhalb von 220 °C nicht mechanisch verformen und elektrisch stabil bleiben.

Ein niedriger Schrumpf bedeutet, dass die Folie bei 200 °C in MD-Richtung $\leq 4$ % und $\geq 0,1$ %, bevorzugt $\leq 3,5$ % und $\geq 0,5$ % schrumpft. In TD-Richtung weist die Folie bei 200 °C einen Schrumpf von $\geq 2$ % auf.

Zur wirtschaftlichen Herstellung zählt, dass die Rohstoffe bzw. Rohstoffkomponenten, die zur Herstellung der Folie benötigt werden, mit handelsüblichen Industrietrocknern, wie Vakuumtrockner, Wirbelschichttrockner, Fließbetttrockner oder Festbetttrockner (Schachttrockner), getrocknet werden können. Wesentlich ist, dass die Rohstoffe nicht verkleben und nicht thermisch abgebaut werden. Die genannten Trockner arbeiten bei Temperaturen zwischen 100 und 170 °C. Auch schonende Vakuumtrockner mit Trocknungstemperaturen unter 130 °C benötigen in der Kondensatorfolienproduktion Nachtrockner (Hopper) mit Temperaturen oberhalb von 100 °C.

Die Thermoplastfolie, die als Basisfolie für die Kondensatorfolie gemäß der Erfindung dient, wird im allgemeinen nach an sich bekannten Extrusionsverfahren hergestellt.

Im Rahmen eines dieser Verfahren wird so vorgegangen, dass die entsprechenden Schmelzen durch eine Flachdüse extrudiert werden, die so erhaltene Folie zur Verfestigung auf einer oder mehreren Walze/n (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längs- und auch die Querstreckung bei $T_G + 10$ °C bis $T_G + 60$ °C ($T_G$ = Glastemperatur der Folie) durchgeführt. Das Längsstreckverhältnis liegt allgemein im Bereich von 2:1 bis 6:1, bevorzugt von 3:1 bis 4,5:1. Das Querstreckverhältnis liegt allgemein im Bereich von 2:1 bis 5:1, bevorzugt von 3:1 bis 4,5:1 und das der gegebenenfalls durchgeführten zweiten Längs- und Querstreckung liegt bei 1,1:1 bis 5:1.

Die erste Längsstreckung kann gegebenenfalls gleichzeitig mit der Querstreckung (Simultanstreckung) durchgeführt werden. Als besonders günstig hat es sich erwiesen, wenn das Streckverhältnis in Längs- und Querrichtung jeweils größer als ≥ 3,5 ist.

Bei der nachfolgenden Thermofixierung wird die Folie etwa 0,1 bis 10 Sekunden lang bei einer Temperatur von 180 bis 260 °C, bevorzugt 220 bis 245 °C gehalten. Anschließend an beziehungsweise beginnend in der Thermofixierung wird die Folie um 0 bis 15 %, bevorzugt um 1,5 bis 8 % in Quer- und gegebenenfalls auch in Längsrichtung relaxiert, wobei in einer besonders bevorzugten Ausführungsform mindestens die letzten 2 % Relaxation bei Temperaturen unterhalb von 200 °C stattfinden. Anschließend wird die Folie abgekühlt und aufgewickelt.

Die aufgewickelte Folie wird anschließend mit einer leitfähigen Beschichtung versehen. Zu diesem Zweck wird sie beispielsweise in für konventionelle Metallisierungsmaschinen (z.B. der Fa. Applied Films, vorm. Leybold) geeignete Breiten konfektioniert (z.B. 500 mm Breite) und anschließend nach den bekannten Verfahren metallisiert (eine Beschichtung mit einem anderen leitfähigen Material wie leitfähigen Polymeren ist ebenfalls möglich) und anschließend in die gewünschte Breite zur Kondensatorherstellung konfektioniert. Aus diesen sogenannten metallisierten Schmalschnitten werden dann Kondensatorwickel gefertigt, diese werden dann flachgepresst (Temperaturen zwischen 0 und 280 °C), schoopiert und kontaktiert.

Eine im Sinne der Erfindung bevorzugte Möglichkeit zur Kondensatorherstellung ist das Wickeln der Schmalschnitte auf Räder oder Stäbe, die schoopiert, im Ofen thermostabilisiert (Temperaturen zwischen 100 und 280 °C) und dann in die entsprechenden Kondensatorbreiten geschnitten werden (Schichtkondensatoren), welche dann abschließend kontaktiert werden. Das Tempern kann dabei gegebenenfalls auch vor dem Schoopen erfolgen.

Die Spannungsfestigkeit eines Kondensators hängt im allgemeinen von der Dicke des Dielektrikums, von der Art des Kondensators (Wickelkondensator oder Schichtkondensator) sowie der leitfähigen Beschichtung ab. Eine hohe Spannungsfestigkeit bedeutet, dass die aus der erfindungsgemäßen Folie mit Stabilisator hergestellten Kondensatoren eine um 5 bis 20 % höhere Spannungsfestigkeit in Volt aufweisen als Kondensatoren, die unter gleichen Bedingungen aus handelsüblichen Kondensatorfolien gleicher Dicke hergestellt werden.

Das gleiche gilt bei der Verwendung von Stabilisator und gleichzeitiger Verwendung von Rohstoffen ohne Antimonkristalle. Hier weisen die Kondensatoren aus dieser Folie eine 10 bis 25 % höhere Spannungsfestigkeit auf. Bei Verwendung von schrumpfarmer Folie mit Stabilisator ohne Antimonkristalle steigt die Mehrbelastbarkeit auf 15 bis 30 % an.

Die Spannweite der Verbesserung hängt davon ab, ob Wickel- oder Schichtkondensatoren hergestellt werden, wobei die Verbesserung bei Schichtkondensatoren höher ausfällt. Eine Randverstärkung der Metallisierung führt ebenfalls zu einer Verbesserung der Differenz zwischen herkömmlichen Kondensatorfolien und Folien gemäß der Erfindung.

Besonders überraschend sind die sehr guten elektrischen Eigenschaften, z.B. die hohe Spannungsfestigkeit und Impulsfestigkeit der Kondensatoren aus den Folien gemäß der Erfindung. Die Folien eignen sich daher besonders gut zur Herstellung von Kondensatoren wie Wickel- oder Schichtkondensatoren, vorzugsweise Zwischenkreiskondensatoren. So zeigen diese Kondensatoren bei dieser besonders sensiblen Anwendung kein Versagen trotz des Einsatzes der Zusatzstoffe wie Stabilisatoren und Radikalfänger.

In den nachfolgenden Ausführungsbeispielen erfolgt die Messung der einzelnen Eigenschaften gemäß den angeführten Normen bzw. Verfahren.

**Messmethoden**

**Schmelzewiderstand**

15 g Rohstoff werden in ein Glasrohr verbracht und 2 Stunden bei 180 °C getrocknet. Das Rohr wird in ein 285 °C heißes Ölbad getaucht und evakuiert. Durch schrittweises Absenken des Drucks auf $0,1 * 10^{-2}$ bar wird die Schmelze blasenfrei gemacht (entschäumt). Das Rohr wird anschließend mit Stickstoff geflutet und die auf 200 °C vorgeheizten Elektroden (zwei Platinbleche ($A = 1 \text{ cm}^2$) im Abstand von 0,5 cm voneinander) langsam in die Schmelze eingetaucht. Nach 7 Minuten erfolgt bei 100 V Messspannung (High Resistance Meter 4329 A von Hewlett Packard) die Messung, wobei der Messwert zwei Sekunden nach dem Anlegen der Spannung genommen wird.

**Schrumpf**

Der thermische Schrumpf wird in einer Doppelbestimmung an zwei quadratischen Abschnitten der Folie mit jeweils 10 cm Kantenlänge bestimmt, wobei eine Kante des jeweiligen Folienabschnitts parallel zur Maschinenrichtung ausgerichtet ist. Die Kantenlängen der Proben vor dem Aufheizen ($L_0$) werden genau ausgemessen und die Proben 15 Minuten in einem Umlufttrockenschrank bei der jeweils angegebenen Temperatur getempert. Die getemperten Proben (L) werden dem Trockenschrank entnommen und die Länge einer entsprechenden Kante bei Raumtemperatur genau vergleichend gegenüber der Länge vor der Temperung gemessen.

**Spannungsprüfung**

An die fertigen Kondensatoren wird bei 25 °C für 2 Sekunden eine Spannung angelegt (maximaler Spannungsanstieg in V/µs = (Dicke in µm) *20). Die Startspannung richtet sich nach der Dicke der Einsatzfolie und berechnet sich nach

$$\text{Spannung in Volt} = 69 * (\text{Dicke in } \mu\text{m})^{1,3629}$$

Der Spannungstest gilt bei jedem Kondensator als bestanden, wenn die Spannung während der zwei Sekunden um nicht mehr als 20 % abnimmt.

Die angelegte Spannung wird anschließend in 5 Volt-Schritten solange erhöht, bis von 10 Kondensatoren 3 ausgefallen sind. Die an diesem Punkt erreichte Spannung wird als Maß für die Spannungsfestigkeit genommen.

**SMD-Lötbarkeit**

Die fertigen Kondensatoren werden für 2 Minuten in einem Ofen mit 235 °C eingebracht. Anschließend werden sie der Spannungsprüfung unterzogen. Die Bedingungen bleiben die gleichen wie bei der Spannungsprüfung. Der Test gilt jedoch nur dann als bestanden, wenn optisch keine Deformationen der Kondensatoren zu erkennen sind.

**Beispiele**

Bei nachstehenden Beispielen und den Vergleichsbeispielen handelt es sich jeweils um Folien unterschiedlicher Dicke, die nach einem bekannten Extrusionsverfahren hergestellt wurden. Aus den erhaltenen Folien wurden jeweils Kondensatoren gefertigt.

**Verwendete Rohstoffe**

Alle angegebenen Bestandteile bei den einzelnen Masterbatchen und den Rohstoffen werden bei der PET-Herstellung zugegeben. Die mineralischen Zuschläge werden vor der Zugabe zur Reaktionsmischung in Glykol dispergiert und in einer Perlmühle auf die angegebenen Partikelgrößen eingestellt.

Das Polyester-Masterbatch MB1 enthält neben dem PET-Anteil 1 Gew.-% Sylysia® 320 (Fuji, Japan), $d_{50}$-Wert 2,4 µm, und 3 Gew.-% Aerosil® TT600 (Degussa). Der SV-Wert des Polymers beträgt 800. Das Masterbatch enthält 250 ppm Antimontrioxyd als Polykondensationskatalysator aus der PET-Herstellung und weiterhin 5 000 ppm Irganox® 256 (Ciba Specialities, Schweiz), das bei der Rohstoffherstellung vor der Umesterung als glykolische Dispersion zugegeben wird.

Das Polyester-Masterbatch MB2 entspricht in seiner Zusammensetzung dem MB1 mit dem Unterschied, dass kein Irganox® 256 enthalten ist.

Das Polyester-Masterbatch MB3 enthält neben dem PET-Anteil 1 Gew.-% Sylobloc® 44H (Grace, Deutschland), $d_{50}$-Wert 2,6 µm, und 3 % Gew.-% Aerosil® TT600. Der SV-Wert des Polymers beträgt 800. Das Masterbatch enthält 12 ppm Titan aus Titankatalysator C94 (Fa. Synetix) als Polykondensationskatalysator aus der PET-Herstellung und weiterhin 6 000 ppm Irganox® 1010, das bei der Rohstoffherstellung vor der Umesterung als glykolische Dispersion zugegeben wird.

Das Polyester-Masterbatch MB4 entspricht in seiner Zusammensetzung dem MB3 mit dem Unterschied, dass kein Irganox® 1010 enthalten ist.

Das Polyester-Masterbatch MB5 enthält neben dem PET-Anteil 1 Gew.-% Calciumcarbonat Hydrocarb® 70 (Fa. Omya), $d_{50}$-Wert 1,6 µm. Der SV-Wert des Polymers beträgt 800. Das Masterbatch enthält 12 ppm Titan aus Titankatalysator C94 als Polykondensationskatalysator aus der PET-Herstellung und weiterhin 6 000 ppm Irganox® 1010, das bei der Rohstoffherstellung vor der Umesterung als glykolische Dispersion zugegeben wird.

Das Polyester-Masterbatch MB6 entspricht in seiner Zusammensetzung dem MB5 mit dem Unterschied, dass kein Irganox® 1010 enthalten ist.

Das Polyester-Masterbatch MB7 enthält neben dem PET-Anteil 1 Gew.-% Calciumcarbonat Hydrocarb®70, $d_{50}$-Wert 1,6 µm. Der SV-Wert des Polymers beträgt 800. Das Masterbatch enthält 250 ppm Antimontrioxyd als Polykondensationskatalysator aus der PET-Herstellung und weiterhin 6 000 ppm Irganox® 1010, das bei der Rohstoffherstellung vor der Umesterung als glykolische Dispersion zugegeben wird.

Der Rohstoff R1 besteht aus Polyethylenterephthalat , SV-Wert von 820. Er enthält 300 ppm Antimontrioxyd als Polykondensationskatalysator aus seiner Herstellung.

Der Rohstoff R2 besteht aus Polyethylenterephthalat , SV-Wert von 820. Er enthält 12 ppm Titan aus Titankatalysator C94 als Polykondensationskatalysator aus seiner Herstellung.

Der Rohstoff R3 besteht aus Polyethylenterephthalat , SV-Wert von 820. Er enthält neben PET 1 000 ppm Sylobloc® 44h, $d_{50}$-Wert 2,4 $\mu$m, und 3 000 ppm Omyalith® 90 (Fa. Omya), $d_{50}$-Wert 1,0 $\mu$m. Er enthält außerdem 300 ppm Antimontrioxyd als Polykondensationskatalysator sowie 500 ppm Irganox® 1010, das bei der Rohstoffherstellung vor der Umesterung als glykolische Dispersion zugegeben wird.

Der Rohstoff R4 besteht aus Polyethylenterephthalat , SV-Wert von 820. Er enthält neben PET 1 000 ppm Sylobloc® 44h, $d_{50}$-Wert 2,4 $\mu$m, und 3 000 ppm Omyalith 90, $d_{50}$-Wert 1,0 $\mu$m. Der Rohstoff enthält 300 ppm Antimontrioxyd als Polykondensationskatalysator.

Der Rohstoff R5 hat die gleiche Zusammensetzung wie R4, zusätzlich jedoch 500 ppm Irganox® 1010, das bei der Rohstoffherstellung vor der Umesterung als glykolische Dispersion zugegeben wird. Der Rohstoff enthält weiterhin 10 ppm Kaliumacetat.

Der Schmelzewiderstand der eingesetzten Rohstoffe MB1 bis MB7 und R1 bis R4 lag zwischen 25 * $10^7$ und 30 * $10^7$ $\Omega$ cm. Der Schmelzewiderstand des R5 lag bei 0,5 * $10^7$ $\Omega$ cm.

**Folienherstellung**

Die PET-Chips wurden im in den Beispielen angegebenen Verhältnis gemischt und in einem Wirbelschichttrockner bei 155 °C für 1 Minute vorkristallisiert und anschließend für 3 Stunden in einem Schachttrockner bei 150 °C getrocknet und bei 290 °C extrudiert. Das geschmolzene Polymer wurde aus einer Düse über eine Abzugswalze gekühlt und abgezogen. Der 43 $\mu$m dicke Film wurde um den Faktor 3,8 in Maschinenrichtung bei 116 °C gestreckt. In einem Rahmen erfolgte bei 110 °C eine Querstreckung um den Faktor 3,7. Anschließend wurde die Folie bei 239 °C thermofixiert. Die Folie wurde dann in Querrichtung um 4 % bei Temperaturen von 230 bis 190 °C relaxiert und anschließend nochmals um 3 % bei Temperaturen von 180 bis 130 °C relaxiert. Es ergab sich eine Endfoliendicke von 2 $\mu$m.

**Kondensatorherstellung**

Die Folie wurde jeweils mit einer ca. 500 Angstrom dicken Aluminiumschicht bedampft, wobei mittels Abdeckbändern ein unmetallisierter Streifen von 2 mm Breite zwischen je 18 mm breiten metallisierten Streifen erzeugt wird und die Folie anschließend in 10 mm breite Streifen geschnitten, so dass am Rand der 1 mm breite unmetallisierte Streifen (Freirand) verbleibt. Zwei je 600 Meter lange Streifen, einer mit dem Freirand auf der linken Seite und einer mit dem Freirand auf der rechten Seite, wurden gemeinsam auf ein Metallrad mit 20 cm Durchmesser aufgewickelt. Dabei haben die beiden Streifen einen Versatz von 0,5 mm in der Breitenrichtung. Oberhalb und unterhalb der metallisierten Streifen wurden je 10 Lagen unmetallisierte Folie (gleiche Folie) aufgewickelt. Über der obersten Lage wurde ein Metallband mit einem Druck von 0,1 kg/cm$^2$ festgezogen. Der Wickel auf dem Rad wurde anschließend auf beiden Seiten schoopiert, mit einer 0,2 mm dicken Silberschicht bedampft und bei 195 °C für 60 Minuten im Ofen (geflutet mit trockenem Stickstoff) getempert. Von dem Wickelrad wurde anschließend das Metallband entfernt und der Wickel dann im Abstand von 0,7 cm in einzelne Kondensatoren geschnitten.

Es wurden gemäß obiger Vorschrift Folien mit folgenden Rezepturen hergestellt:

| | |
|---|---|
| Beispiel 1 | 20 Gew.-% MB1, 80 Gew.-% R1 |
| Beispiel 2 | 20 Gew.-% MB1, 80 Gew.-% R2 |
| Vergleichsbeispiel 1 | 20 Gew.-% MB2, 80 Gew.-% R1 |

| | |
|---|---|
| Beispiel 3 | 20 Gew.-% MB3, 80 Gew.-% R1 |
| Beispiel 4 | 20 Gew.-% MB3, 80 Gew.-% R2 |
| Vergleichsbeispiel 2 | 20 Gew.-% MB4, 80 Gew.-% R1 |
| Vergleichsbeispiel 3 | 20 Gew.-% MB4, 80 Gew.-% R2 |

| | |
|---|---|
| Beispiel 5 | 20 Gew.-% MB5, 80 Gew.-% R1 |
| Beispiel 6 | 20 Gew.-% MB5, 80 Gew.-% R2 |
| Beispiel 7 | 20 Gew.-% MB7, 80 Gew.-% R2 |
| Vergleichsbeispiel 4 | 20 Gew.-% MB6, 80 Gew.-% R1 |

| Beispiel 8 | 100 Gew.-% R3 |
|---|---|
| Beispiel 9 | 100 Gew.-% R5 |
| Vergleichsbeispiel 5 | 100 Gew.-% R4 |

Aus den Folien wurden wie oben beschrieben Kondensatoren hergestellt.

Die Spannungsfestigkeit der Kondensatoren kann der folgenden Tabelle entnommen werden.

Tabelle

| Beispiel/Vergleichsbeispiel | Spannungsfestigkeit in V |
|---|---|
| Beispiel 1 | 352 |
| Beispiel 2 | 365 |
| Vergleichsbeispiel 1 | 310 |
| | |
| Beispiel 3 | 349 |
| Beispiel 4 | 363 |
| Vergleichsbeispiel 2 | 312 |
| Vergleichsbeispiel 3 | 321 |
| | |
| Beispiel 5 | 348 |
| Beispiel 6 | 361 |
| Beispiel 7 | 347 |
| Vergleichsbeispiel 4 | 305 |
| | |
| Beispiel 8 | 345 |
| Beispiel 9 | 330 |
| Vergleichsbeispiel 5 | 325 |

Der Vergleich der Beispiel-/Vergleichsbeispielgruppen zeigt jeweils deutlich, dass die Spannungsfestigkeit bei Zugabe von Irganox® zum Rohstoff steigt. Eine weitere Verbesserung ergibt sich, wenn durch Verwendung von titankatalysierten Rohstoffen keine Antimonkristalle enthalten sind oder diese in den Masterbatchen durch geeignete Partikel unterdrückt werden. Eine zu hohe Leitfähigkeit (geringer Schmelzewiderstand) wie in Beispiel 9 führt zu einer Verschlechterung.

**Patentansprüche**

1. Leitfähig beschichtete, orientierte Folie aus einem Thermoplasten mit einer Dicke im Bereich von 0,5 bis 12 μm, **dadurch gekennzeichnet, dass** sie neben einer leitfähigen Beschichtung mindestens einen Stabilisator in Mengen von 50 bis 15 000 ppm, bezogen auf das Gewicht der Folie, enthält.

2. Folie nach Anspruch 1, **dadurch gekennzeichnet, dass** der Stabilisator in Mengen von 100 bis 5 000 ppm enthalten ist, wobei der Stabilisator ein primärer oder sekundärer Stabilisator, vorzugsweise ein phenolischer Stabilisator ist.

3. Folie nach Anspruch 1 oder 2, **dadurch gekennzeichnet, dass** die Folie keine oder nur sehr kleine Antimonkristalle enthält.

4. Folie nach einem oder mehreren der Ansprüche 1 bis 3, **dadurch gekennzeichnet, dass** als Thermoplast Polyethylenterephthalat (PET), Polyethylennaphthalat (PEN), Polybutylenterephthalat (PBT) oder Mischungen davon eingesetzt werden.

**5.** Folie nach einem oder mehreren der Ansprüche 1 bis 4, **dadurch gekennzeichnet, dass** der Thermoplast anorganische oder organische Partikel enthält.

**6.** Folie nach einem oder mehreren der Ansprüche 1 bis 5, **dadurch gekennzeichnet, dass** sie ein- oder mehrschichtig ist.

**7.** Folie nach einem oder mehreren der Ansprüche 1 bis 6, **dadurch gekennzeichnet, dass** sie metallisiert oder mit einem anderen leitfähigen Material beschichtet ist.

**8.** Verfahren zur Herstellung einer leitfähig beschichteten, orientierten Folie, die als Hauptbestandteil einen kristallisierbaren Thermoplasten enthält und eine Dicke im Bereich von 0,5 bis 12 μm aufweist, **dadurch gekennzeichnet, dass** ein kristallisierbarer Thermoplast und mindestens ein Stabilisator in Mengen von 50 bis 15 000 ppm, bezogen auf das Gewicht der Folie, nach einem Extrusionsverfahren zu einem flachen Schmelzefilm ausgeformt, mit Hilfe einer Kühlwalze zur Verfestigung abgeschreckt und die so erhaltene weitgehend amorphe Folie auf einer oder mehreren Walze/n abgezogen, die Folie anschließend biaxial gestreckt (orientiert), thermofixiert und relaxiert sowie mit einer leitfähigen Beschichtung versehen wird.

**9.** Verwendung der Folie nach einem oder mehreren der Ansprüche 1 bis 7 zur Herstellung von Kondensatoren.

**10.** Verwendung der Folie nach Anspruch 9 in Wickel- oder Schichtkondensatoren, vorzugsweise Zwischenkreiskondensatoren.

**EP 1 582 554 A1**

**Europäisches Patentamt**

**EUROPÄISCHER RECHERCHENBERICHT**

Nummer der Anmeldung

EP 05 00 6173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 885 918 A (TORAY INDUSTRIES, INC) 23. Dezember 1998 (1998-12-23) * Ansprüche 1-20; Beispiel 1 * | 1-3,5-10 | C08J5/18 H01G4/00 |
| A | ----- | 4 | |
| X | US 6 537 652 B1 (KOCHEM KARL-HEINZ ET AL) 25. März 2003 (2003-03-25) * Spalte 1, Zeile 47 - Zeile 51; Beispiele 1,2 * | 1-3,5-10 | |
| A | ----- | 4 | |
| A | US 4 183 749 A (IIDA, OSAMU ET AL) 15. Januar 1980 (1980-01-15) * Beispiel 4 * | 1-10 | |
| A | ----- US 6 361 913 B1 (PAI DAMODAR M ET AL) 26. März 2002 (2002-03-26) * Spalte 11, Zeile 60 - Spalte 13, Zeile 15; Beispiele 4,1 * * Spalte 1, Zeile 18 - Zeile 21 * ----- | 1-10 | |

**RECHERCHIERTE SACHGEBIETE (Int.Cl.7)**

C08G
H01G
B29C

Der vorliegende Recherchenbericht wurde für alle Patentansprüche erstellt

| Recherchenort | Abschlußdatum der Recherche | Prüfer |
|---|---|---|
| München | 8. Juli 2005 | olde Scheper, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

10

**ANHANG ZUM EUROPÄISCHEN RECHERCHENBERICHT**
**ÜBER DIE EUROPÄISCHE PATENTANMELDUNG NR.**

EP 05 00 6173

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2005

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0885918 | A | | 23-12-1998 | JP | 10156938 | A | 16-06-1998 |
| | | | | JP | 10112419 | A | 28-04-1998 |
| | | | | CA | 2229778 | A1 | 19-02-1998 |
| | | | | DE | 69714022 | D1 | 22-08-2002 |
| | | | | DE | 69714022 | T2 | 28-11-2002 |
| | | | | EP | 0885918 | A1 | 23-12-1998 |
| | | | | US | 6094337 | A | 25-07-2000 |
| | | | | CN | 1198759 | A ,C | 11-11-1998 |
| | | | | WO | 9806776 | A1 | 19-02-1998 |
| | | | | ID | 19278 | A | 28-06-1998 |
| | | | | AU | 5275698 | A | 12-11-1998 |
| US 6537652 | B1 | | 25-03-2003 | AU | 763749 | B2 | 31-07-2003 |
| | | | | AU | 1154700 | A | 15-05-2000 |
| | | | | CN | 1324490 | A | 28-11-2001 |
| | | | | WO | 0025330 | A1 | 04-05-2000 |
| | | | | EP | 1141982 | A1 | 10-10-2001 |
| | | | | JP | 2002528875 | T | 03-09-2002 |
| | | | | MX | PA01004300 | A | 06-06-2003 |
| | | | | NO | 20012094 | A | 27-04-2001 |
| | | | | SK | 5752001 | A3 | 08-10-2001 |
| US 4183749 | A | | 15-01-1980 | JP | 1259439 | C | 12-04-1985 |
| | | | | JP | 53101417 | A | 04-09-1978 |
| | | | | JP | 59033894 | B | 18-08-1984 |
| | | | | DE | 2805716 | A1 | 17-08-1978 |
| US 6361913 | B1 | | 26-03-2002 | CA | 2134276 | A1 | 22-06-1995 |
| | | | | JP | 7199511 | A | 04-08-1995 |

EPO FORM P0461

Für nähere Einzelheiten zu diesem Anhang : siehe Amtsblatt des Europäischen Patentamts, Nr.12/82